(19)

Europäisches
Patentamt

European
Patent Office

Office européen
des brevets

(11)　EP 4 549 881 A1

(12)　　　　　　　　　EUROPEAN PATENT APPLICATION

(43) Date of publication:
   07.05.2025　Bulletin 2025/19

(51) International Patent Classification (IPC):
   **G01C 21/16** (2006.01)　　　**G01C 25/00** (2006.01)
   **G01P 1/00** (2006.01)

(21) Application number: 24203586.3

(22) Date of filing: 30.09.2024

(52) Cooperative Patent Classification (CPC):
   **G01C 25/005; G01C 21/16; G01P 1/00**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH MA MD TN**

(30) Priority: **01.11.2023　IN 202311074461**

(71) Applicant: **Honeywell International Inc.
   Charlotte, NC 28202 (US)**

(72) Inventor: **URS, M Kantha Raj
   Charlotte, 28202 (US)**

(74) Representative: **Haseltine Lake Kempner LLP
   Cheapside House
   138 Cheapside
   London EC2V 6BJ (GB)**

(54)　**SYSTEMS, APPARATUSES, AND METHODS TO COMPENSATE FIELD INSTALLATION
　　　ERROR OF A TARS DEVICE**

(57)　　　A system, apparatus, and a method to compensate field installation error of a TARS device is disclosed. An exemplary system comprises at least one sensor configured to detect attitude data and one or more processors having a memory, operationally coupled with the at least one sensor. The one or more processors are configured to iteratively adjust an offset error present in attitude data until attitude data is within a linear region. Each iteration receives, from the at least one sensor, the attitude data and determines a plurality of calibration coefficients based at least on the received attitude data using a piecewise linear equation. The plurality of calibration coefficients are applied to the attitude data. Thereafter, an offset error present in the attitude data is adjusted based at least on application of the plurality of calibration coefficients until the attitude data is within the linear region of the piecewise linear equation.

100

FIG. 2

EP 4 549 881 A1

## Description

## TECHNOLOGICAL FIELD

Example embodiments of the present disclosure relate generally to sensors, and more particularly, to systems, apparatuses, and methods to compensate field installation error of a Transportation Attitude Reference System (TARS) device.

## BACKGROUND

Transportation Attitude Reference System (TARS) is a technology used in the field of transportation and vehicle systems to determine and monitor the attitude and/or orientation of a vehicle. For example, a TARS device provides critical data about the vehicle's pitch, roll, and yaw angles, which are essential for various applications, including navigation, stability control, and safety systems in aircraft, automobiles, marine vessels, and other modes of transportation. Typically, a TARS device includes sensors such as accelerometers and gyroscopes to measure and report the vehicle's pitch, roll, and yaw angles accurately. In the domain of transportation and vehicle technology, the integration of calibrated TARS device onto vehicles is a fundamental step in enhancing safety and precision. The TARS device goes through a factory calibration. However, when a user mounts the TARS device on the vehicle, an offset error is introduced within TARS device which is the installation mounting error with respect to X, Y, & Z axes. A recurring challenge arises due to the installation process, particularly an offset error that may cause the TARS device to not deliver accurate data.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

## BRIEF SUMMARY

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, a system is disclosed. The system comprises at least one sensor configured to detect attitude data. Further, one or more processors having a memory, are operationally coupled with the at least one sensor. The one or more processors are configured to iteratively adjust an offset error present in attitude data until the attitude data is within a linear region. Each iteration receives, via the at least one sensor, the attitude data, wherein the attitude data includes the offset error and determines a plurality of calibration coefficients based at least on the received attitude data. The plurality of calibration coefficients is determined using a piecewise linear equation. Further, in each iteration the determined plurality of calibration coefficients is applied on the received attitude data. Thereafter, in each iteration, the offset error present in the attitude data is adjusted, based at least on the application of the plurality of calibration coefficients, until the attitude data is within the linear region.

In some embodiments, the attitude data comprises at least one of an angular rate, an acceleration, and an inclination of a vehicle. Further, the attitude data is configured to calculate roll/pitch/yaw (RPY) values to adjust the offset error in the attitude data. In some embodiments, the one or more processors are further configured to execute one or more functions based at least on one or more commands received from a user. Further, the one or more functions include a reset all function, a set function, and an add function. Further, the reset all function corresponds to clearing the determined plurality of calibration coefficients to 0. Further, the set function corresponds to replacing RPY values with the PGN RPY value. Further, the add function corresponds to updating the RPY values with the plurality of calibration coefficients determined from the detected attitude data.

In some embodiments, the one or more processors are configured to receive a command from a user for switching from a normal mode to a compensation mode to adjust the offset error. Further, the normal mode corresponds to detecting the attitude data via the at least one sensor and the compensation mode corresponds to adjusting the offset error present in the attitude data.

In some embodiments, the at least one sensor comprises a 3-axis gyroscope or a 3-axis accelerometer. In some embodiments, the plurality of calibration coefficients comprises coefficients $a_0$, $a_1$, $a_2$ derived from piecewise linear equation

$$f(x) = a_0 + a_1 x + a_2 x^2 = a_0 + \sum_{k=1}^{2} a_k x^k$$

. In some embodiments, the system corresponds to at least one of Transportation Attitude Reference System (TARS) device mounted over the vehicle.

In another example embodiment, a method is disclosed. The method iteratively adjusts an offset error present in attitude data until the attitude data is within a linear region. Each iteration comprises steps of receiving, via at least one sensor, attitude data, wherein the attitude data includes the offset error. Further, determining, a plurality of calibration coefficients based at least on the received attitude data using a piecewise linear equation.

Further, applying, the determined plurality of calibration coefficients to the received attitude data. Thereafter, adjusting, the offset error present in the attitude data based at least on the application of the plurality of calibration coefficients, until the attitude data is within the linear region.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below.

## BRIEF DESCRIPTION OF THE DRAWINGS

Having thus described certain example embodiments of the present disclosure in general terms, reference will hereinafter be made to the accompanying drawings, which are not necessarily drawn to scale, and wherein:

FIG. 1 illustrates a transportation attitude reference system (TARS) device installed on a vehicle in accordance with an example embodiment of the present disclosure;

FIG. 2 illustrates a perspective view of an exemplary TARS device in accordance with an example embodiment of the present disclosure;

FIG. 3 illustrates a block diagram of an exemplary TARS device in accordance with an example embodiment of the present disclosure;

FIG. 4 illustrates an exemplary table for TARE PGN in accordance with an example embodiment of the present disclosure;

FIG. 5 illustrates an exemplary table for TARE command in accordance with an example embodiment of the present disclosure;

FIG. 6 illustrates a flowchart of an exemplary method to compensate field installation error of the TARS device in accordance with an example embodiment of the present disclosure;

FIG. 7 illustrates another flowchart of the exemplary method to compensate field installation error of the TARS device in accordance with an example embodiment of the present disclosure;

FIG. 8 illustrates an exemplary graph associated with a result of a piecewise linear correction of the TARS device in accordance with an example embodiment of the present disclosure; and

FIG. 9 illustrates an exemplary simulation result of the TARS device in accordance with an example embodiment of the present disclosure.

## DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of systems, apparatuses, and methods to compensate field installation error of a Transportation Attitude Reference System (TARS) device. Embodiments may correct an offset error in the attitude data of TARS device after the installation of TARS device on a vehicle. Embodiments may calculate attitude data and determine calibration coefficients using piecewise linear equation on the attitude data. Embodiments may then apply correction on the calculated attitude data. Embodiments may calculate attitude data and determine calibration coefficients repeatedly until the final output is within a linear region, which may be one or more thresholds associated with a specification associated with an application the TARS device 100 is used in. Additionally, embodiments may be integrated into the TARS device installed on a vehicle, to provide robust and reliable system for improved vehicle stability control.

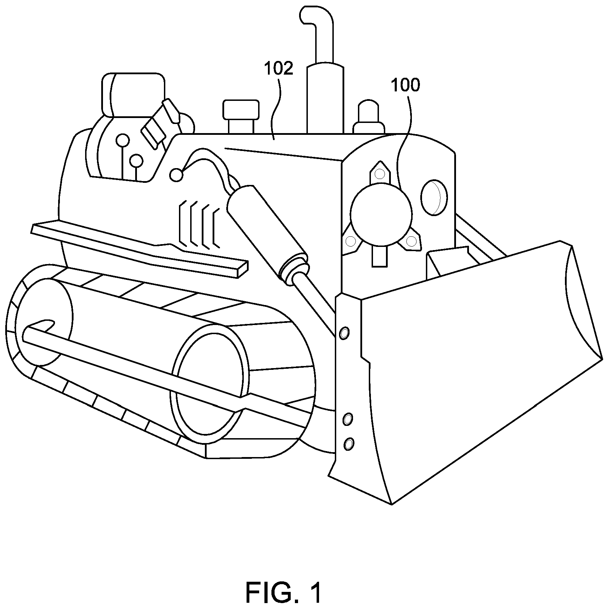

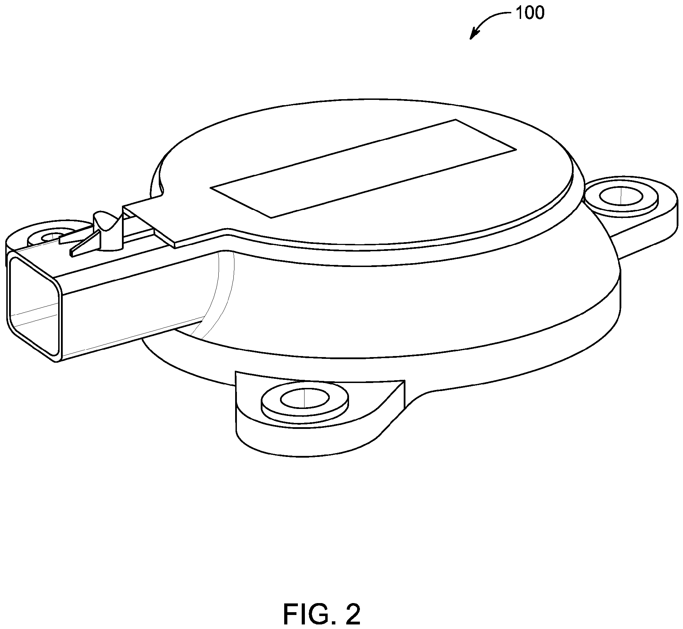

FIG. 1 illustrates a transportation attitude reference system (TARS) device 100 installed on a vehicle 102 in accordance with an example embodiment of the present disclosure. FIG. 2 illustrates a perspective view of an exemplary TARS device 100 in accordance with an example embodiment of the present disclosure. FIG. 1 is described in conjunction with FIG. 2.

In some embodiments, the TARS device 100 may be a packaged sensor array to report attitude data of the vehicle 102. The attitude data may include at least an angular rate, an acceleration, and an inclination of the vehicle 102. Further, the TARS device 100 may be mounted on, in, or over the vehicle 102. In some embodiments, the vehicle 102 may be, for example, a forestry vehicle, construction vehicle, pile driver, skid steer loader, mobile crane, smart leveling hitch, wheel loader, excavator vehicles, or any other vehicle known in the art. In one example embodiment, the TARS device 100 may be mounted above the front left tire of a construction vehicle. In another example embodiment, the TARS device 100 may be mounted on the hood of a forestry vehicle. The TARS device 100 may be installed, for example, over any fixed part of the vehicle 102 without departing from the scope of the present disclosure.

Further, the TARS device 100 may be configured to determine the vehicle's pitch, roll, and yaw angles. When a user mounts the TARS device 100 on the vehicle 102 an offset error may be introduced within the TARS device 100. The offset error may be an installation mounting error with respect to X, Y, & Z axes. In some embodiments, the TARS device 100 may be calibrated after installation on the vehicle 102 to compensate and/or reduce the offset error in the attitude data of the TARS device 100, which is described in greater detail herein.

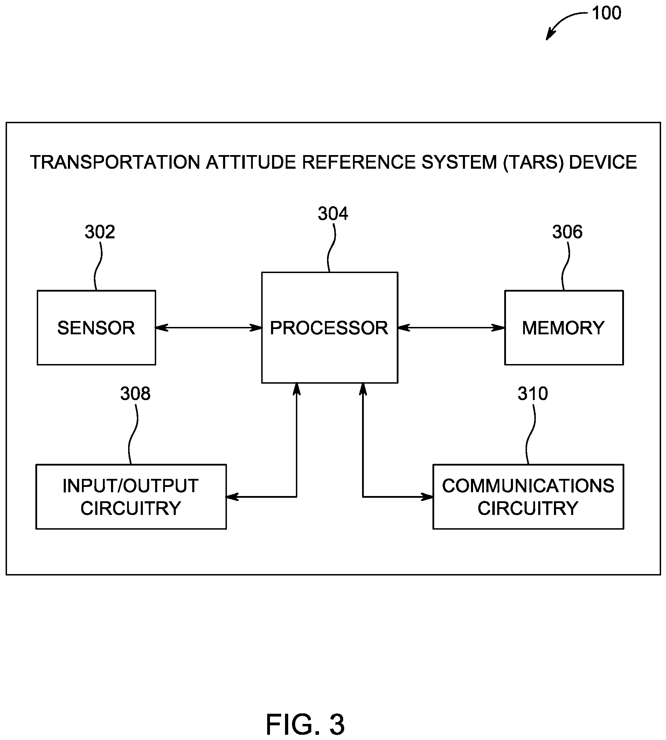

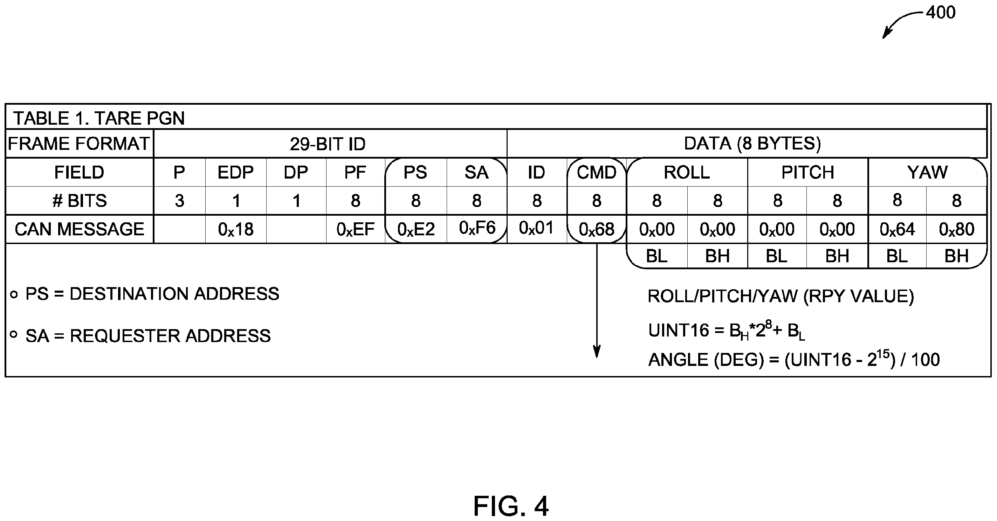

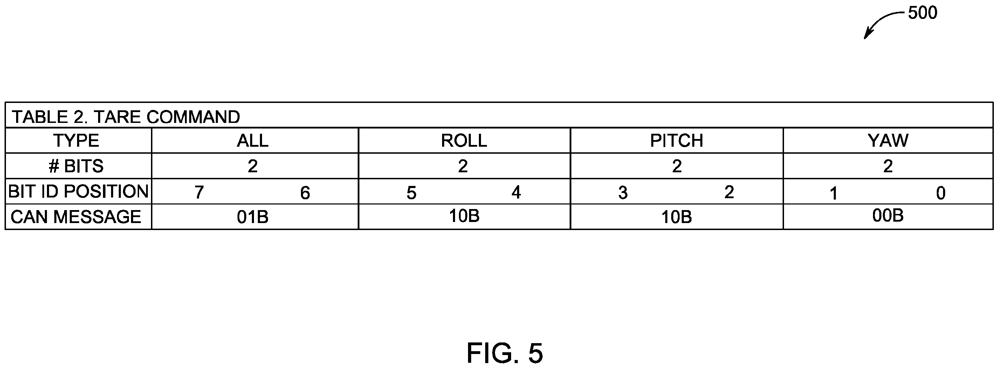

FIG. 3 illustrates a block diagram of the exemplary TARS device 100 in accordance with an example embodiment of the present disclosure. FIG. 4 illustrates an exemplary table 400 for TARE PGN in accordance with an example embodiment of the present disclosure. FIG. 5 illustrates an exemplary table for TARE command in accordance with an example embodiment of the present disclosure. FIG. 3 is described in conjunction with FIGS. 4-5.

The TARS device 100 may comprise at least one sensor 302, one or more processors 304, a memory 306, input/output circuitry 308, and/or communications circuitry 310. In an example embodiment, a system or apparatus system may be present outside the TARS device 100 and communicatively coupled to the TARS device 100 to perform one or more operations described herein to compensate the field installation error of a TARS device 100.

The at least one sensor 302 may be configured to detect attitude data of the vehicle 102. For example, and in some embodiments, the at least one sensor 302 may be installed over the vehicle 102. The at least one sensor 302 may include, for example, a 3-axis gyroscope and/or a 3-axis accelerometer. In some embodiments, the attitude data may include an angular rate, an acceleration, and an inclination of the vehicle.

The angular rate of the vehicle 102 may represent how the angular position or orientation of the vehicle 102 changes with time. The angular position or orientation may include how quickly the vehicle 102 rotates around an axis of rotation. The angular position or orientation may further include how fast the axis of rotation itself changes direction. In an example embodiment, the 3-axis gyroscope may be used to detect the angular rate of the vehicle 102.

In some embodiments, the acceleration of the vehicle 102 may represent the rate at which the vehicle 102 may increase the speed. In an example embodiment, the 3-axis accelerometer may be used to detect the acceleration of the vehicle 102. In some embodiments, the inclination of the vehicle 102 may represent an angle between a horizontal plane and a line connecting the vehicle's center of gravity and a point where the tire of the vehicle 102 makes contact with the ground. In an example embodiment, the 3-axis gyroscope sensor in combination with 3-axis accelerometer may be used to detect the inclination of the vehicle 102.

Further, the detected attitude data may include information on the orientation of the vehicle 102 in three-dimensional space based on the angular rate, the acceleration, and the inclination of the vehicle 102. The vehicle's orientation may further include measurements related to the vehicle's roll, pitch, and yaw (RPY) values. Further, roll may include the rotation of the vehicle 102 about a longitudinal axis of the vehicle 102. The longitudinal axis may include an imaginary line running from the front of the vehicle 102 to the rear of the vehicle 102. Further, roll may include the tilting of the vehicle 102 from side to side. Further, pitch may include the rotation of the vehicle 102 about a lateral axis of the vehicle 102, which runs from side to side. Pitch may include the motion of the vehicle 102 tilting forward and backward. Further, yaw may include the rotation of the vehicle 102 about a vertical axis of the vehicle 102, often considered the "up" axis. In some embodiments, yaw may involve the vehicle 102 turning left or right without tilting.

In some embodiments, the at least one sensor 302 may detect the attitude data of the vehicle 102 in real time. In some embodiments, the attitude data may be calculated at a frequency of 100 hertz (Hz). The attitude data may be detected for at periodic intervals. For example, the periodic interval may be of 1 minute. In some embodiments, a low pass filter may be used to remove noise from the detected attitude data. For example, a low pass filter of 10 Hz and 3dB cutoff frequency may be used.

In some embodiments, the TARS device 100 may comprise the one or more processors 304. The one or more processors 304 may be operationally coupled with the at least one sensor 302. In various examples, the one or more processors 304 may include suitable logic, circuitry, and/or interfaces that are operable to execute one or more instructions stored in the memory 306 to perform predetermined operations. In some embodiments, the one or more processors 304 may be configured to decode and execute any instructions received from one or more other electronic devices or server(s). The one or more processors 304 may be configured to execute one or more computer-readable program instructions, such as program instructions to carry out any of the functions described in this description. Further, the one or more processors 304 may be implemented using one or more processor technologies known in the art. Examples of the processor include, but are not limited to, one or more general purpose processors (e.g., INTEL® or Advanced Micro Devices® (AMD) microprocessors) and/or one or more special purpose processors (e.g., digital signal processors or Xilinx® System On Chip (SOC) Field Programmable Gate Array (FPGA) processor).

The memory 306 may store a set of instructions and data. In some embodiments, the memory 306 may include the one or more instructions that are executable by the one or more processors 304 to perform specific operations. It is apparent to a person with ordinary skill in the art that the one or more instructions stored in the memory 306 enable the hardware of the system 100 to perform the predetermined operations. Some of the commonly known memory implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

The TARS device 100 may include input/output circuitry 308 that may, in turn, be in communication with a processor 304 to receive input from a user and/or output to a user. In some embodiments, the input/output circuitry 308 may also include additional functionality including a keyboard, a mouse, a joystick, a touch screen, touch areas, soft keys, a microphone, a speaker, or other input/output mechanisms.

The TARS device 100 may include communications circuitry 310 to communicate with one or more other devices and/or system. In some embodiments the communications circuitry 310 may be a device or circuitry embodied in either hardware or a combination of hardware and software that is configured to receive and/or transmit data from/to a network and/or any other device, circuitry, or module in communication with the TARS device 100. In some embodiments the communications circuitry 310 may include a plug with multiple terminals that may be connected to another device, apparatus, and/or system. In some embodiments, the communications circuitry 310 may include, for example, a network interface for enabling communications with a wired or wireless communication network. For example, the communications circuitry 310 may include one or more network interface cards, antennae, buses, switches, routers, modems, and supporting hardware and/or software, or any other device suitable for enabling communications via a network. for example, the one or more processors 304 may be in communication with a remote device (not shown) via a network interface (not shown) of the communications circuitry 310. The network interface may facilitate a communication link between the one or more processors 304 and the remote device. It may be noted that the network interface may further facilitate a communication link among the other components of the TARS device 100. Further, the network interface may be a wireless network and/or a wired network. The network interface may be implemented using one or more communication techniques. The one or more communication techniques may be Radio waves, Wi-Fi, Bluetooth, ZigBee, Z-wave, Visible Light Communication (VLC), Worldwide Interoperability for Microwave Access (Wi-MAX), Long Term Evolution (LTE), Wireless Local Area Network (WLAN), Infrared (IR) communication, Public Switched Telephone Network (PSTN), Radio waves and other communication techniques, known in the art.

In some embodiments, the remote device may allow a user to send one or more input commands to the one or more processors 304 to be used with adjusting the offset error present in the detected attitude data. The one or more input commands may include or be associated with, but are not limited to, executing one or more functions, calculating the attitude data, determining the plurality of calibration coefficients, providing one or more values for desired attitude data, resetting the plurality of calibration coefficients, or executing a "script" of commands with varying time intervals in between the detecting attitude data or applying the plurality of calibration coefficients.

In some embodiments, the remote device may include a smartphone, a tablet, a laptop, a personal computer (PC), a smart watch or any other computing device known in the art. In one embodiment, the user may use the smartphone or the tablet as the remote device. In another embodiment, a dedicated Android or IOS application may be developed to interact with the one or more processors 304. Further, the dedicated application may be used to discover, configure, and/or command the one or more processors 304.

As described herein, the one or more processors 304 may be operationally coupled to the at least one senor 302. Further, the one or more processors 304 may be configured to receive, via the at least one sensor, the attitude data. As discussed, the detected attitude data may include information on the orientation of the vehicle in three-dimensional space. The vehicle's orientation may further include measurements related to the vehicle's roll, pitch, and yaw (RPY) values. The one or more processors 304 may be configured to average the received attitude data. Further, the one or more processors 304 may average the received attitude data at the periodic interval. The one or more processors 304 may take average of another received attitude data after the periodic interval. For example, the one or more processors 304 may take average of another received attitude data after 1 minute.

In some embodiments, the one or more processors 304 may be configured to determine a plurality of calibration coefficients based at least on the received attitude data. The plurality of calibration coefficients may be determined based at least on the average of the received attitude data. Further, the plurality of calibration coefficients may be determined using a piecewise linear equation. The piecewise linear equation may be a type of mathematical function that consist of multiple linear segments, each linear segment defined over a specific interval. In an example embodiment, the piecewise linear equation may include:

$$f(x) = a_0 + a_1 x + a_2 x^2 = a_0 + \sum_{k=1}^{2} a_k \, x^k$$ . Further, the plurality of calibration coefficients may include coefficients $a_0$, $a_1$, $a_2$ of the piecewise linear equation. The coefficients $a_0$, $a_1$, $a_2$ may be determined based on the average of the detected attitude data.

In some embodiments, in the piecewise linear equation, a piecewise function may represent a series of multiple linear segments. Further, each linear segment may be defined over specific data sets. To estimate values within the specific data sets, a linear interpolation may be applied to the data sets. Linear interpolation on the data sets may consist of pieces of linear interpolants. Further, linear interpolation on the data sets may include a concatenation of linear interpolants between each pair of the data sets. As a result, a continuous curve may be obtained. Thus, linear interpolation may estimate values within each linear interpolant to represent complex relationships. Further, the one or more processors 304 may be configured to apply the determined plurality of calibration coefficients on the average of the received attitude data. In some embodiments, the one or more processors 304 may apply the determined plurality of calibration coefficients on the vehicle's roll, pitch, and yaw (RPY) values.

In some embodiments, the one or more processors 304 may be configured to adjust an offset error present in the detected attitude data based at least on the application of the plurality of calibration coefficients. The one or more processors 304 may adjust the offset error until the attitude data is within a linear region of the piecewise linear equation. In some embodiments, the at least one sensor 302 may detect the attitude data and the one or more processors 304 may determine the plurality of calibration coefficients repeatedly, until the attitude data is within a linear region of the piecewise linear equation.

In some embodiments, the offset error may include a constant error present across all measurements of the at least one sensor 302. The offset error may be a 'shift' in the output of the at least one sensor 302. In one example, if the at least one sensor 302 is supposed to output 24°, but instead outputs 26°, the at least one sensor 302 may have an offset error of 2°. Further, the at least one sensor 302 may detect the attitude data and the one or more processors 304 may determine the plurality of calibration coefficients repeatedly, until the attitude data is within the linear region of the piecewise linear equation. As a result, the attitude data may come closer to the linear region of the piecewise linear equation and the offset error may reduce with every repetition. Further, the final plurality of calibration coefficients may be stored in the memory 306.

As discussed above, the remote device may allow the user to send one or more input commands to the one or more processors 304 to adjust the offset error present in the detected attitude data. Further, the one or more processors 304 may receive an input command to execute one or more functions which are described in conjunction with FIG. 4 and FIG. 5.

Referring to FIG. 4, and in accordance with an example embodiment or the present disclosure, an exemplary table 400 for TARE PGN is illustrated. The TARE may be the offset error. It will be apparent to one skilled in the art that the TARE PGN is a peer to peer controller area network (CAN) message as per SAEJ1939 standard. The TARE PGN may receive a TARE command as illustrated in FIG. 5 and the information of the detected attitude data. The TARE PGN may include the Roll/-Pitch/Yaw (RPY) values. The table 400 may include the TARE PGN values used in the TARS device 100. The table 400 may include a destination address (PS). The PS may indicate the address of the system. Further, the table 400 may include a requester address (SA). The SA may indicate the address of the user/the remote device. Further, CAN message for each PS and SA may be provided with the number of bits being used in each PS and SA.

Further, CAN message for roll, pitch, yaw (RPY) may be provided to calculate the RPY value. In some embodiments, the RPY value may be calculated using:

uint16 = $B_H*2^8 + B_L$. Further, angle may be calculated in degrees using the calculated uint16. The angle may be calculated using: Angle (deg) = (uint16-$2^{15}$)/100. The angle may indicate the actual output obtained after applying the plurality of calibration coefficients on the detected attitude data.

Referring to FIG. 5, and in accordance with an example embodiment or the present disclosure, an exemplary table 500 of TARE command is illustrated. The table 500 may include TARE command for each roll, pitch, yaw and all of the roll, pitch, yaw. Each type of TARE command may include 2 Bits. Further, 2 Bits of "ALL" may include BIT ID position of 7 and 6. Further, the 2 Bits of "roll" may include bit ID position of 5 and 6. The 2 Bits of "pitch" may include bit ID position of 3 and 2. Further, the 2 Bits of "yaw" may include bit ID position of 1 and 0.

Further, in table 500, the CAN message may include one or more functions. Further, the one or more processors 304 may receive the TARE command to execute the one or more functions. The one or more functions may further include 00B, 01B, 10B and 11B. The 00B CAN message may include a function of "no action". The 01B CAN message may include a function of "reset all" or "set all". The 10B CAN message may include a function of "add". The 11B CAN message may include a function of "reserved". The reset all function may correspond to clearing the determined plurality of calibration coefficients to 0. The set function may correspond to replacing RPY values with the PGN RPY value, such as described herein. The add function may correspond to updating the RPY values with the plurality of calibration coefficients determined from the detected attitude data.

In various embodiments, the one or more processors are configured to receive a command from a user for switching from a normal mode to a compensation mode to adjust the offset error. The normal mode may correspond to detecting the attitude data via the at least one sensor. The compensation mode may correspond to adjusting the offset error present in the attitude data. The remote device may include a display to show whether the TARS device 100 is in the normal mode or the compensation mode. Further, the TARS device 100 may correspond to at least one of Transportation Attitude Reference System (TARS) device 100 mounted over the vehicle 102. Thus, the offset error may be adjusted to correctly mount the TARS device 100 over the vehicle 102.

The detection of the attitude data and execution of further processing steps may be performed by the one or more processors of the TARS device 100 using the at least one sensor 302 without departing from the scope of the disclosure.

The above-mentioned components of the TARS device 100 have been provided only for illustration purposes.

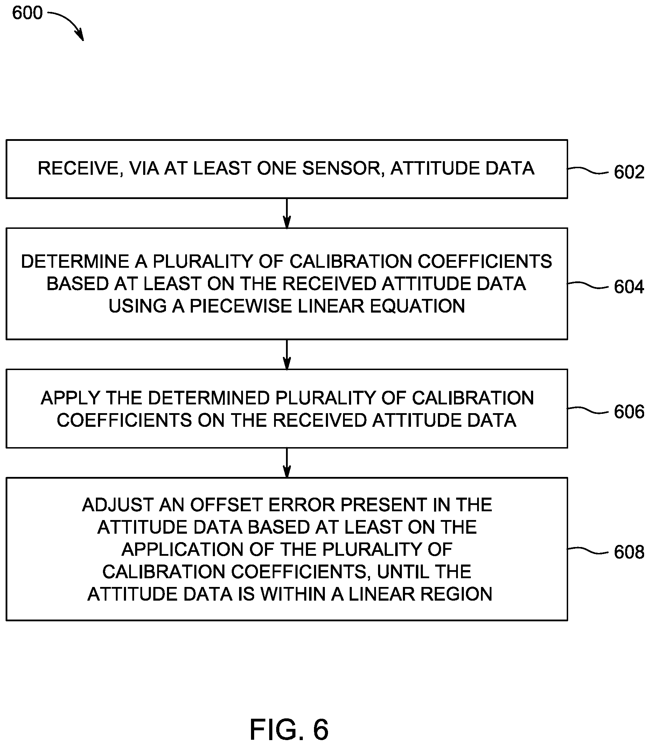

FIG. 6 illustrates a flowchart of an exemplary method 600 to compensate field installation error of the TARS device 100 in accordance with an example embodiment of the present disclosure. The method 600 iteratively adjust an offset error present in attitude data until the attitude data is within a linear region, wherein each iteration comprises:

At first, receiving, via at least one sensor 302, attitude data, at step 602. The attitude data includes the offset error. In some embodiments, the at least one sensor 302 may be installed over the vehicle to detect attitude data. Further, the at least one sensor 302 may detect the attitude data in real-time. In some embodiments, the attitude data may include the angular rate, the acceleration, and the inclination of the vehicle. Further, roll/pitch/yaw (RPY) values are detected from the attitude data. Further, the at least one sensor 302 may include at least the 3-axis gyroscope, the 3-axis accelerometer. Further, the average of the detected attitude data may be taken.

For example, the vehicle 102 is equipped with the at least one sensor 302 i.e. the 3-axis gyroscope and the 3-axis accelerometer works in unison. The 3-axis gyroscope reports an angular rate of 30 degrees per second and the 3-axis accelerometer reports an acceleration of 2 meters per second squared, and an inclination of 5 degrees.

Successively, determining, a plurality of calibration coefficients based at least on the received attitude data using the piecewise linear equation, at step 604. In some embodiments, the plurality of calibration coefficients may comprise coefficients $a_0$, $a_1$, $a_2$ derived from piecewise linear equation

$$f(x) = a_0 + a_1 x + a_2 x^2 = a_0 + \sum_{k=1}^{2} a_k\, x^k$$

. Further, the plurality of calibration coefficients may be applied on the average of the detected attitude data.

For example, using the one or more processors 104, the system 100 determines the plurality of calibration coefficients as 3, 2, 2 based on the angular rate of 30 degrees per second, the acceleration of 2 meters per second squared, and the inclination of 5 degrees.

Successively, applying, the determined plurality of calibration coefficients on the received attitude data, at step 606. Further, the plurality of calibration coefficients may be applied on the average of the detected attitude data. For example, the one or more processors 104 applies the determined plurality calibration coefficients 3, 2, 2 to the received attitude data. Further, the one or more processors 104 adjusts the angular rate from 30 to 28 degrees per second, acceleration from 2.0 to 1.5 meters per second squared, and the inclination from 5.0 to 4.3 degrees.

Successively, adjusting, the offset error present in the attitude data based at least on the application of the plurality of calibration coefficients, until the attitude data is within the linear region, at step 608. In some embodiments, the attitude data may be detected and the plurality of calibration points may be determined repeatedly, until the attitude data is within a linear region. For example, the one or more processors 100 adjusts the offset error in the angular rate from 2 degrees per second to 0.3 degrees per second, resulting in highly accurate attitude data.

In some embodiments, the method 600 may further comprise executing, via the one or more processors, one or more functions, based at least on one or more commands received from a user, wherein the one or more functions include a reset all function, a set function, and an add function. Further, the reset all function may correspond to clearing the determined plurality of calibration coefficients to 0. Further, the set function may correspond to replacing the detected attitude data with average of the detected attitude data at a periodic interval. Further, the add function may correspond to updating the detected attitude data with difference between the average attitude data and attitude data detected after the periodic interval.

In some embodiments, the method 600 may further comprise receiving, via the one or more processors, a command from a user for switching from a normal mode to a compensation mode to adjust the offset error. Further, the normal mode may correspond to detecting the attitude data via the at least one sensor. And the compensation mode may correspond to adjusting the offset error present in the attitude data.

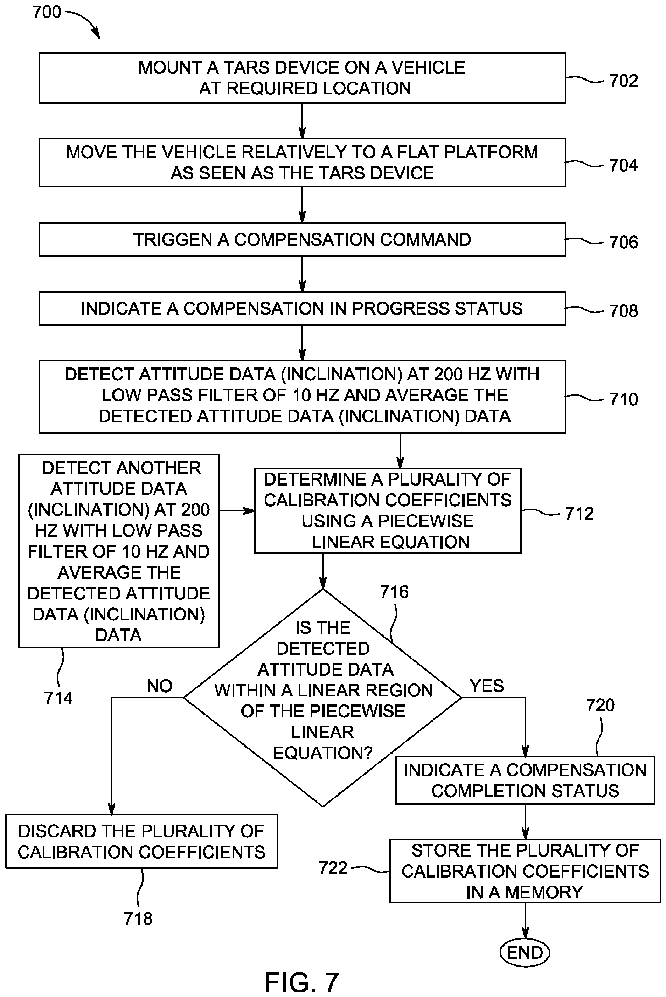

FIG. 7 illustrates a flowchart of an exemplary method 700 to compensate field installation error of the TARS device 100 in accordance with an example embodiment of the present disclosure. FIG. 7 is described in conjunction with FIG. 6.

At first, the TARS device 100 is mounted on the vehicle 102 at a required location, at step 702. In some embodiments, the vehicle 102 may be, for example, a forestry vehicle, construction vehicle, pile driver, skid steer loader, mobile crane, smart leveling hitch, wheel loader, excavator vehicles, or any other vehicle known in the art. In one example, the TARS device 100 may be mounted above the front left tire of a construction vehicle.

Successively, the vehicle 102 is moved relatively to a flat platform (not shown) as seen as the TARS device 100, at step 704. Further, the vehicle 102 may be moved relatively to the flat platform for the TARS device 100 to detect attitude data. The vehicle may be moved either in forward direction or in backward direction.

Successively, a compensation command is triggered, at step 706. In some embodiments, the compensation command or command may be received from the user for switching the TARS device 100 from a normal mode to a compensation mode to adjust the offset error. Successively, a compensation in progress status is indicated, at step 708. When the TARS device 100 may be switched to compensation mode, the progress status including the compensation may be visible to a user on display of the remote device.

Successively, attitude data (inclination) at 200 Hz with low pass filter of 10 Hz is detected and an average of the detected attitude data (inclination) data is calculated, at step 710. Further, the attitude data may be detected by the at least one sensor 302 as explained in step 602. In some embodiments, the attitude data may include the angular rate, the acceleration, and the inclination of the vehicle 102. Further, an average may be taken of the detected attitude data.

Successively, a plurality of calibration coefficients is determined by using a piecewise linear equation, at step 712. Further, the plurality of calibration coefficients may be determined on the average of the detected attitude data as explained in step 604. Successively, another attitude data (inclination) at 200 Hz with low pass filter of 10 Hz is detected and an average of the detected attitude data (inclination) data is calculated, at step 714. Further, more attitude data may be detected and average may be taken of the detected another attitude data. Further, the determined plurality of calibration coefficients may be applied on the detected attitude data as explained in step 602.

Successively, determine whether the detected attitude data is within a linear region of the piecewise linear equation, at step 716. In some embodiments, the attitude data may be detected and the plurality of calibration points may be determined repeatedly, until the attitude data is within the linear region.

Successively, the plurality of calibration coefficients is discarded, at step 718. In one case, if the attitude data may not fall within the linear region, the plurality of calibration coefficients may be discarded and another plurality of calibration coefficients may be determined. Successively, a compensation completion status is indicated, at step 720. In another case, if the attitude data falls within the linear region, the compensation mode of the TARS device 100 may be completed. Further, the completion status may be displayed on the display of the remote device. Successively, storing the plurality of calibration coefficients in the memory 302, at step 722. Further, the final plurality of calibration coefficients may be stored in the memory of the TARS device 100.

It will be appreciated that the method(s) 600, 700 may be implemented by one or more the embodiments disclosed herein, which may be combined or modified as desired or needed. Additionally, the steps in the method(s) 600, 700 may be modified, changed in order, performed differently, performed sequentially, concurrently or simultaneously, or otherwise modified as desired or needed.

The above-mentioned embodiments of the present disclosure may be executed by the one or more processors 304 of the TARS device 100 and the method(s) 600, 700 using the at least one sensor 302 without departing from the scope of the disclosure.

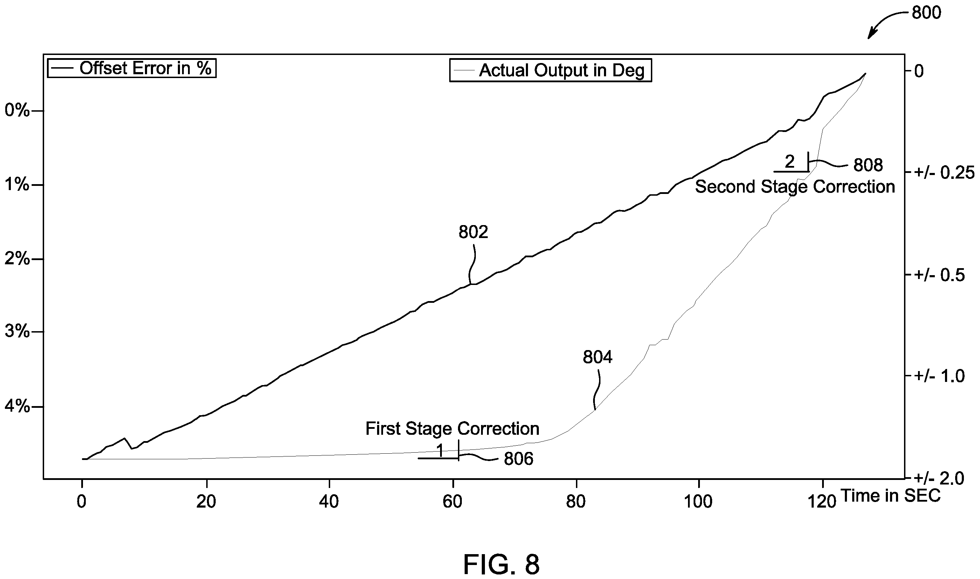

FIG. 8 illustrates an exemplary graph associated with a result 800 of a piecewise linear correction of the TARS device 100 in accordance with an example embodiment of the present disclosure.

In some embodiments, attitude data may be detected and the plurality of calibration coefficients may be determined, repeatedly in one or more regions.

Further, the one or more regions may include 0-60 seconds (s), 60 s-120 s, etc. Further, the result 800 may involve finding out the region from the one or more regions to determine the calibration coefficients which results the detected attitude data within the linear region of the piecewise linear equation.

As discussed herein, the linear interpolation may be applied to estimate values to obtain a continuous curve. The piecewise linear correction on the detected attitude data may be applied using the linear interpolation. In some embodiments, plot 802 may indicate the offset error in percentage (%). Further, plot 804 may indicate actual inclination output in degrees (deg). In some embodiments, the actual inclination output may be an output, obtained after applying the plurality of calibration coefficients of the detected attitude data. Without applying offset correction, the offset error on the TARS device 100 installed on the vehicle 102 may be as large as 4% which is +/- 2 deg of inclination error in the detected attitude data.

Further, a first stage correction 806, at 0 to 60 seconds (s) may result in 2% offset error which is +/- 0.5 deg of the inclination error. Further, a second stage correction 808, at 60 s to 120 s may result in 0.1% offset error which is +/- 0.2 deg of the inclination error. In some embodiments, an inclination offset specification is +/- 0.2 deg. In some embodiments, the inclination offset specification may be the specification in which the detected attitude data may fall within the linear region of the piecewise linear equation. Further, if the second stage correction 808 may not get into the Inclination offset Specification, a third stage correction (not shown), at 120 s to 180 s may be applied, and may go on further till 0% offset error may be obtained.

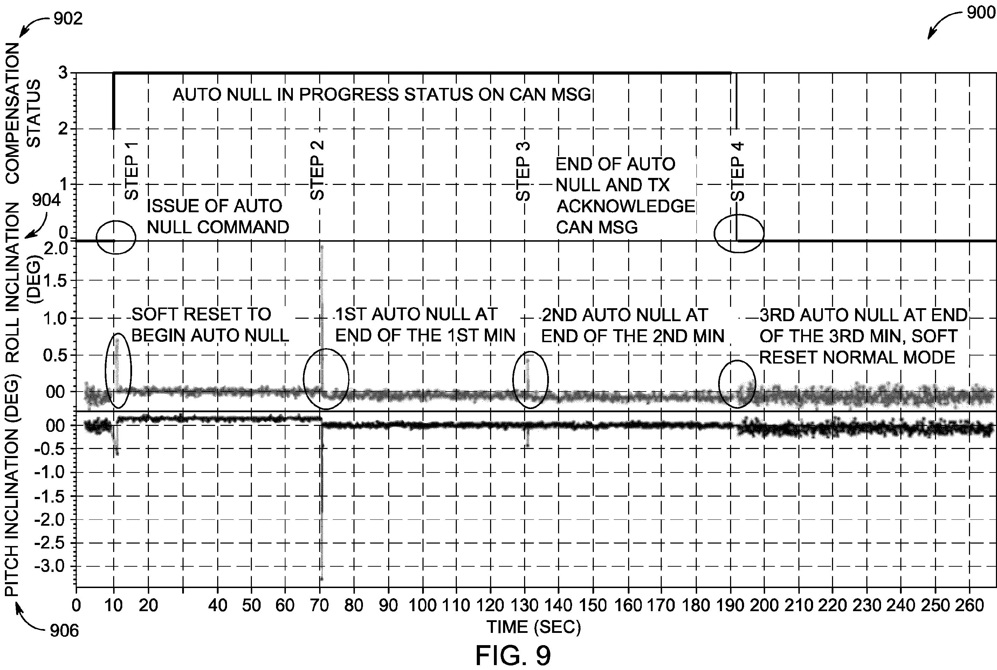

FIG. 9 illustrates an exemplary simulation result 900 of the TARS device 100 in accordance with an example embodiment of the present disclosure.

In some embodiments, the user may send a command, via the remote device, for switching from a normal mode to a compensation mode to adjust the offset error. Further, after receiving the command, a compensation status 902 may show up in progress. Further, 0 may indicate the normal mode and 3 may indicate the compensation mode. As a result, the command may put the TARS device 100 into the compensation mode to adjust the offset error in the attitude data.

In some embodiments, the attitude data may be detected repeatedly at a frequency of 200 Hz. The attitude data being detected may include a roll inclination 904 and a pitch inclination 906. Further, the roll inclination 904 may be detected in degrees (deg). Further, the pitch inclination 906 may be detected in deg. The attitude data may be detected for the periodic interval. For example, the periodic interval may show up every 1 minute.

In some embodiments, the TARS device 100 may average the roll inclination 904 and the pitch inclination 906 at the periodic interval. Further, the low pass filter may be used to remove noise from the average. The average may be considered as first average sample at 0 minute of the compensation status 902. Similarly, another average sample may be obtained. Further, the plurality calibration coefficients may be determined for the of first average sample and another average sample using the piecewise linear equation. Further, a correction may be applied on the determined plurality of calibration coefficients. The correction may be applied in terms of linear interpolation. In one case, if the correction does not fall within the linear region, discard the determined plurality of calibration coefficients may be discarded. And again multiple average samples of attitude data may be obtained at the periodic interval. For example, the periodic interval may show up every 1 minute.

The mentioned steps in the above embodiment may be repeated until the correction may fall within the linear region. And, the correction may be considered as the final plurality of calibration coefficients and may further be stored in the memory 306. Further, the remote device may indicate the successful compensation sequence 902. As a result, the TARS device 100 may switch back to normal mode from the compensation mode.

Many modifications and other embodiments of the disclosure set forth herein will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

**Claims**

1. A system comprising:

   at least one sensor configured to detect attitude data;
   one or more processors having a memory and operationally coupled with the at least one sensor, wherein the one or more processors are configured to:

   iteratively adjust an offset error present in attitude data until the attitude data is within a linear region, wherein each iteration comprises:

receive, from the at least one sensor, the attitude data, wherein the attitude data includes the offset error;

determine a plurality of calibration coefficients based at least on the received attitude data using a piecewise linear equation;

apply the determined plurality of calibration coefficients on the received attitude data; and

adjust the offset error present in the attitude data based at least on the application of the plurality of calibration coefficients until the attitude data is within the linear region.

2. The system of claim 1, wherein the attitude data comprises at least one of an angular rate, an acceleration, and an inclination of a vehicle, wherein the attitude data is configured to calculate roll/pitch/yaw (RPY) values to adjust the offset error in the attitude data.

3. The system of claim 2, wherein the one or more processors are further configured to execute one or more functions based at least on one or more commands received from a user, wherein the one or more functions include a reset all function, a set function, and an add function.

4. The system of claim 3, wherein the reset all function corresponds to clearing the determined plurality of calibration coefficients to 0.

5. The system of claim 3, wherein the set function corresponds to replacing RPY values with a PGN RPY value.

6. The system of claim 3, wherein the add function corresponds to updating the RPY values with the plurality of calibration coefficients determined from the detected attitude data.

7. The system of claim 1, wherein the one or more processors are configured to receive a command from a user for switching from a normal mode to a compensation mode to adjust the offset error.

8. The system of claim 7, wherein the normal mode corresponds to detecting the attitude data via the at least one sensor and the compensation mode corresponds to adjusting the offset error present in the attitude data.

9. The system of claim 1, wherein the system corresponds to at least one of Transportation Attitude Reference System (TARS) device mounted over a vehicle.

10. A method comprising:
iteratively adjust an offset error present in attitude data until the attitude data is within a linear region, wherein each iteration comprises:

receiving, from at least one sensor, attitude data, wherein the attitude data includes the offset error;

determining, a plurality of calibration coefficients based at least on the received attitude data using a piecewise linear equation;

applying, the determined plurality of calibration coefficients on the received attitude data; and

adjusting, the offset error present in the attitude data based at least on the application of the plurality of calibration coefficients, until the attitude data is within the linear region.

11. The method of claim 10, wherein the attitude data comprises at least one of an angular rate, an acceleration, and an inclination of a vehicle, wherein the attitude data is configured to calculate roll/pitch/yaw (RPY) values to adjust the offset error in the attitude data.

12. The method of claim 11, further comprising, executing one or more functions, based at least on one or more commands received from a user, wherein the one or more functions include a reset all function, a set function, and an add function.

13. The method of claim 12, wherein the reset all function corresponds to clearing the determined plurality of calibration coefficients to 0.

14. The method of claim 12, wherein the set function corresponds to replacing RPY values with a PGN RPY value.

15. The method of claim 12, wherein the add function corresponds to updating the RPY values with the plurality of calibration coefficients determined from the detected attitude data.

FIG. 1

FIG. 2

100

TRANSPORTATION ATTITUDE REFERENCE SYSTEM (TARS) DEVICE

304

302

306

SENSOR ◄──────► PROCESSOR ◄──────► MEMORY

308

310

INPUT/OUTPUT CIRCUITRY ◄──────► ──────► COMMUNICATIONS CIRCUITRY

FIG. 3

TABLE 1. TARE PGN

| FRAME FORMAT | 29-BIT ID | | | | | | DATA (8 BYTES) | | | | | | | |
|---|---|---|---|---|---|---|---|---|---|---|---|---|---|---|
| FIELD | P | EDP | DP | PF | PS | SA | ID | CMD | ROLL | | PITCH | | YAW | |
| # BITS | 3 | 1 | 1 | 8 | 8 | 8 | 8 | 8 | 8 | 8 | 8 | 8 | 8 | 8 |
| CAN MESSAGE | | $0_x18$ | | $0_xEF$ | $0_xE2$ | $0_xF6$ | $0_x01$ | $0_x68$ | $0_x00$ | $0_x00$ | $0_x00$ | $0_x00$ | $0_x64$ | $0_x80$ |
| | | | | | | | | | BL | BH | BL | BH | BL | BH |

o PS = DESTINATION ADDRESS

o SA = REQUESTER ADDRESS

ROLL/PITCH/YAW (RPY VALUE)

$UINT16 = B_H*2^8 + B_L$

$ANGLE (DEG) = (UINT16 - 2^{15}) / 100$

400

FIG. 4

—500

| TABLE 2. TARE COMMAND | | | | | | | |
|---|---|---|---|---|---|---|---|
| TYPE | ALL | | ROLL | | PITCH | | YAW |
| # BITS | 2 | | 2 | | 2 | | 2 |
| BIT ID POSITION | 7 | 6 | 5 | 4 | 3 | 2 | 1 | 0 |
| CAN MESSAGE | 01B | | 10B | | 10B | | 00B |

FIG. 5

600

```
┌─────────────────────────────────────────────────────┐
│  RECEIVE, VIA AT LEAST ONE SENSOR, ATTITUDE DATA      │──── 602
└─────────────────────────────────────────────────────┘
                          │
                          ▼
┌─────────────────────────────────────────────────────┐
│  DETERMINE A PLURALITY OF CALIBRATION COEFFICIENTS    │
│  BASED AT LEAST ON THE RECEIVED ATTITUDE DATA         │──── 604
│  USING A PIECEWISE LINEAR EQUATION                    │
└─────────────────────────────────────────────────────┘
                          │
                          ▼
┌─────────────────────────────────────────────────────┐
│  APPLY THE DETERMINED PLURALITY OF CALIBRATION        │
│  COEFFICIENTS ON THE RECEIVED ATTITUDE DATA           │──── 606
└─────────────────────────────────────────────────────┘
                          │
                          ▼
┌─────────────────────────────────────────────────────┐
│  ADJUST AN OFFSET ERROR PRESENT IN THE                │
│  ATTITUDE DATA BASED AT LEAST ON THE                  │
│  APPLICATION OF THE PLURALITY OF                      │──── 608
│  CALIBRATION COEFFICIENTS, UNTIL THE                  │
│  ATTITUDE DATA IS WITHIN A LINEAR REGION              │
└─────────────────────────────────────────────────────┘
```

FIG. 6

FIG. 7

FIG. 8

FIG. 9

Europäisches Patentamt

European Patent Office

Office européen des brevets

# EUROPEAN SEARCH REPORT

**Application Number**

EP 24 20 3586

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "Piecewise linear function - Wikipedia", , 3 October 2023 (2023-10-03), pages 1-5, XP093252951, Retrieved from the Internet: URL:https://en.wikipedia.org/w/index.php?title=Piecewise_linear_function&oldid=1178464029 * the whole document * | 1-15 | INV. G01C21/16 G01C25/00 G01P1/00 |
| A | EP 2 026 037 A2 (HONEYWELL INT INC [US]) 18 February 2009 (2009-02-18) * paragraphs [0001], [0029] * | 1-15 | |

**TECHNICAL FIELDS SEARCHED (IPC)**

G01C
G01P

The present search report has been drawn up for all claims

| Place of search | Date of completion of the search | Examiner |
|---|---|---|
| The Hague | 21 February 2025 | Berbil Bautista, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 3586

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2025

| Patent document cited in search report | | Publication date | Patent family member(s) | | Publication date |
|---|---|---|---|---|---|
| EP 2026037 | A2 | 18-02-2009 | EP | 2026037 A2 | 18-02-2009 |
| | | | JP | 5237723 B2 | 17-07-2013 |
| | | | JP | 2009098125 A | 07-05-2009 |
| | | | US | 2009048779 A1 | 19-02-2009 |

For more details about this annex : see Official Journal of the European Patent Office, No. 12/82

EPO FORM P0459